# EUROPEAN PATENT SPECIFICATION

(11) **EP 3 284 128 B1**
(45) Date of publication and mention of the grant of the patent: **26.11.2025**
(21) Application number: 16780918.5
(22) Date of filing: 15.04.2016
(51) Int. Cl.: H01M 4/80, H01M 4/00, H01M 4/64, H01M 4/66, H01M 8/0202, H01M 10/04, H01M 50/403

(54) **COATED STACKS FOR BATTERIES AND RELATED MANUFACTURING METHODS**
BESCHICHTETE STAPEL FÜR BATTERIEN UND ZUGEHÖRIGE HERSTELLUNGSVERFAHREN
EMPILEMENTS REVÊTUS POUR BATTERIES ET PROCÉDÉS DE FABRICATION ASSOCIÉS

(30) Priority: 15.04.2015 US 201562178633 P; 09.07.2015 US 201562231539 P
(43) Date of publication of application: 21.02.2018
(73) Proprietor: 24m Technologies, Inc., Cambridge, Massachusetts 02139 (US)
(72) Inventor: CARLSON, Steven, A., Cambridge, MA 02138 (US); SLOAN, Benjamin, Exeter, NH 03833 (US); AVISON, David, W., Boxborough, MA 01719 (US)
(74) Representative: Gill Jennings & Every LLP
(86) International application number: PCT/US2016/027910
(87) International publication number: WO 2016/168715

(56) References cited:
- WO-A1-2015/004069
- WO-A2-2009/120812
- US-A1- 2009 197 183
- US-A1- 2009 290 200
- US-A1- 2009 290 288
- US-A1- 2012 115 029
- US-A1- 2012 115 029
- US-A1- 2012 231 321
- US-A1- 2013 337 349
- US-B1- 6 194 098
- US-B1- 6 277 514
- US-B1- 6 497 780

## Description

### RELATED APPLICATIONS

This application claims the benefit of and priority to U.S. Provisional Patent Application No. 62/178,633, filed April 15, 2015, and U.S. Provisional Patent Application No. 62/231,539, filed July 9, 2015.

### STATEMENT OF GOVERNMENT RIGHTS

This invention was made with government support under Grant Number DE-EE00054333 awarded by the U.S. Department of Energy. The government has certain rights in the invention.

### FIELD OF THE INVENTION

The present invention generally relates to the field of batteries and other electric current producing cells, such as capacitors and lithium-ion capacitors. More particularly, the present invention pertains to coated stacks for lithium batteries, where the various layers of the battery, including the electrode and current collector, are coated on a porous separator and to methods of preparing such coated stacks and batteries.

### BACKGROUND OF THE INVENTION

Throughout this application, various patents are referred to by an identifying citation.

Existing processes for manufacturing lithium batteries, including rechargeable and non-rechargeable lithium batteries, and other types of batteries, are relatively slow, complex and expensive. For example, rechargeable lithium-ion batteries are typically constructed by interleaving strips of the various layers of the battery to form a stack. These layers may include a plastic separator, a conductive metal substrate with a cathode layer coated on both sides, another plastic separator, and another conductive metal substrate with an anode layer coated on both sides. To maintain the alignment of the strips of these materials and for other quality reasons, this interleaving is usually done on manufacturing equipment that is inefficient and costly to construct and operate.

In addition, known lithium batteries have limited energy density and power density. Among other reasons, this is because the separators and the conductive metal substrates in these known batteries are relatively thick, thereby limiting the volume of electroactive material that is present in the battery. In these known batteries, the typical thickness of the copper metal substrate for the anode layers is 10 microns, the typical thickness of the aluminum metal substrate for the cathode layers is 15 microns, and the plastic separators typically have thicknesses ranging from 12 to 30 microns. These thick metal substrates and separators were needed in conventional lithium ion batteries in order to provide sufficient mechanical strength and integrity to the battery assembly. However, these materials are not electrochemically active and, thus, lower the volume of the electroactive or electrochemically active material that is present in current lithium batteries and therefore provide less than ideal capacity.

Lithium batteries are widely used in portable electronics, such as smartphones and portable computers. Among the new applications for lithium batteries are high power batteries for hybrid, plug-in hybrid, and electric vehicles. The cells typically used in lithium batteries for portable computers and other applications are typically cylindrical, but there is a growing trend toward flat cells, such as prismatic or pouch cell designs. Similarly, many of the lithium batteries for vehicles have a prismatic or pouch cell designs.

Furthermore, broad acceptance of electric vehicles requires batteries with improved safety. For example, as noted above, current lithium batteries are fabricated using metal substrates. During manufacture, these metal substrates are typically slit into discrete battery stacks. This has been known to result in metal fragments being embedded into the separator or other portion of the finished battery, which can lead to a short circuit, or other dangerous condition. Other previously proposed arrangements are disclosed in WO 2009/120812 A2, US 6497780 B1, US 6277514 B1, US 6194098 B1, US 2012/115029 A1, and US 2009/290288 A1.

### SUMMARY OF THE INVENTION

It is an object of the present invention to provide a battery stack or battery that could be fabricated on less complex, less expensive and higher speed automated processing equipment than, for example, the equipment utilized for portable computer batteries, and furthermore is particularly adapted for making flat, such as prismatic or pouch, batteries. It is another object to provide a battery that comprises separator and metal layers that are thinner than those currently used. It is another object of the present invention to enable the battery to contain a greater content of electroactive material so as to provide more capacity. Another object is to make batteries safer by reducing the potential for manufacturing defects and including active safety features in the battery, such as a shutdown layer, and separator layers that are self-healing of tears and holes. Another object is provide a battery that is less expensive to make than existing batteries.

The present invention meets the foregoing objects through the coated battery stacks and batteries described herein. The battery stacks and batteries described herein include various coatings and materials, which are described below. Examples of batteries to which the present invention apply include a single electric current producing cell and multiple electric current producing cells combined in a casing or pack. One such type of battery is a lithium battery, including, for example, rechargeable or secondary lithium ion batteries, non-rechargeable or primary lithium metal batteries, rechargeable lithium metal batteries and other battery types such as rechargeable lithium metal alloy batteries.

The lithium battery stacks described herein include a porous separator comprising an organic polymer, an electrode layer adjacent the porous separator, the electrode layer comprising an organic polymer, and a current collector layer coated on the electrode layer, the current collector layer obtained by photonic sintering and comprising sintered metal particles. A battery stack comprising a positive electrode in combination with a battery stack comprising a negative electrode, together, form a battery. The battery stacks and batteries described herein include a separator to keep the two electrodes apart in order to prevent electrical short circuits while also allowing the transport of lithium ions and any other ions during the passage of current in an electrochemical cell. Examples of separators that may be utilized in lithium batteries includes, ceramic separators and polyolefin separators. Ceramic separators include separators comprising inorganic oxides and other inorganic material.

The battery stacks and batteries described herein include an electrode that comprises electroactive material. The electrode layer may be configured to function as the anode (negative electrode) or cathode (positive electrode). In a lithium ion battery, for example, electric current is generated when lithium ions diffuse from the anode to the cathode through the electrolyte. Examples of electroactive materials that may be utilized in lithium batteries include, for example, lithium cobalt oxide, lithium manganese oxide, lithium iron phosphate, lithium nickel manganese cobalt oxide (NMC), and sulfur as electroactive materials in the cathode layers and lithium titanate, lithium metal, silicon, lithium-intercalated graphite, and lithium-intercalated carbon as electroactive materials in the anode layers.

These battery stacks and batteries described herein also include a current collector, which can be one or more current collection layers that are adjacent to an electrode layer. One function of the current collector is to provide a electrically conducting path for the flow of current into and from the electrode and an efficient electrical connection to the external circuit to the cell. A current collector may include, for example, a single conductive metal layer or coating, such as the sintered metal particle layer discussed herein. As discussed further below, an exemplary conductive metal layer that could function as a current collector is a layer of sintered metal particles comprising nickel, which can be used for both the anode or cathode layer. In embodiments of the invention, the conductive metal layer may comprise aluminum, such as aluminum foil, which may be used as the current collector and substrate for the positive electrode or cathode layer. In other embodiments the conductive metal layer may comprise copper, such as a copper foil, which may be used as the current collector and substrate for the negative electrode or anode layer.

The batteries described herein also include an electrolyte, such as those that are useful in lithium batteries. Suitable electrolytes include, for example, liquid electrolytes, gel polymer electrolytes, and solid polymer electrolytes. Suitable liquid electrolytes include, for example, LiPF₆solutions in a mixture of organic solvents, such as a mixture of ethylene carbonate, propylene carbonate, and ethyl methyl carbonate.

In one embodiment the present invention includes a battery stack according to claim 1. **In** one embodiment the battery stack includes a current collector layer comprises sintered nickel particles. In one embodiment the battery stack includes a current collector layer that comprises sintered copper particles. In one embodiment the battery stack includes a current collector layer that comprises sintered aluminum particles. In one embodiment the battery stack includes a current collector layer that is 2-20 µm thick. In one embodiment the battery stack includes a porous separator that comprises particles selected from the group consisting of inorganic oxide particles and inorganic nitride particles. In one embodiment the battery stack includes a porous separator that comprises an organic polymer. In one embodiment the battery stack includes a porous separator that comprises boehmite. In one embodiment the battery stack includes a porous separator that comprises alumina. In one embodiment that battery stack includes a porous separator that comprises between 65-95% boehmite by weight. In one embodiment the battery stack includes a porous separator that has an average pore size between I 0-90 nm. In one embodiment the battery stack includes an electrode layer that is a cathode layer. In one embodiment the battery stack includes an electrode layer that is an anode layer. In one embodiment the battery stack includes a shutdown layer adjacent to the porous separator. In one embodiment the battery stack includes a coating of non-sintered metal particles on a portion of the porous separator.

In one embodiment the application includes a battery stack comprising a porous separator, an electrode layer adjacent the porous separator, a current collector layer coated on the electrode layer, and a coating of non-sintered metal particles on a portion of the porous separator. In one embodiment the coating of non-sintered metal particles forms a non-conductive layer. In one embodiment the battery stack includes a current collector layer that is comprised of sintered metal particles.

In one embodiment the application includes a battery comprising a porous separator, an electrode layer and a current collector layer comprising sintered metal particles. In one embodiment the battery includes an electrode layer that is an anode layer. In one embodiment the battery includes an electrode layer that is a cathode layer.

In one embodiment the invention includes a method of making a battery stack according to claim 10 In one embodiment, the method further comprises the steps of: (f) interleaving the battery stack of one polarity with a battery stack of the opposite polarity; and (g) placing the interleaved battery stacks in a casing. In one embodiment, the method further comprises the step of: (h) vacuum drying the interleaved battery stacks and casing.

### BRIEF DESCRIPTION OF THE DRAWINGS

The features and advantages of the present disclosure will be more fully understood with reference to the following, detailed description when taken in conjunction with the accompanying figures, wherein:
FIG. 1 is a cross-sectional view of a partially assembled battery stack 1 showing a porous separator 20 coated over a substrate 10 and release coating 30.
FIG. 2 is a cross-sectional view of the battery stack of FIG. 1, with the addition of electrode lanes 40a, 40b coated over the porous separator layer 20.
FIG. 3 is a plan view of the battery stack shown in FIG. 2.
FIG. 4 is a cross-sectional view of the battery stack of FIGs. 2 and 3, with the addition of a current collector layer 50 coated over the electrode lanes and reinforcement portions 52 coated over separator layer 20.
FIG. 5 is a plan view of the battery stack of FIG. 4, with the addition of conductive tabbing patches 60 on reinforcement portions 52.
FIG. 6 is a plan view of an alternate embodiment of the partially assembled battery stack of FIG. 5.
FIG. 7 is a plan view of the battery stack assembly shown in FIG. 5 after a slitting step has been performed.
FIG. 8 is a plan view of the battery stack assembly shown in FIG. 6 after a slitting step has been performed.
FIG. 9 is a plan view of the battery stack assembly shown in FIG. 8 after a punching step has been performed, and showing the attachment of an intermediate tab 80 for electrical interconnection.

### DETAILED DESCRIPTION

This invention pertains to coated battery stacks for use in batteries, such as lithium ion batteries and lithium metal batteries, as well as methods of making such batteries and related coated battery stacks. The coated battery stacks and batteries of the present invention have a lower cost, improved power and energy densities, and improved safety.

The present invention includes, but is not limited to, the following designs for lithium batteries and coated stacks and methods of making such batteries and coated stacks. In the following examples, the coated stack may be either an anode stack or a cathode stack, depending on the electrode material selected.

One aspect of the present invention will be described with reference to a process for manufacturing a lithium battery. As described in greater detail below, the process utilizes a reusable substrate 10, onto which the various layers of the battery stack are coated. Once the battery stack is assembled, the battery layers (e.g., electrode, separator, current collector) are delaminated from the substrate 10 and the substrate can be reused to create another battery stack according to the same process. The use of a reusable substrate provides cost saving benefits and reduces waste. However, it is noted that this same process can be carried out using a disposable or non-reusable substrate.

The first step of the process includes coating a substrate 10 with a release coating 30. The substrate 10 and release coating 30 will be referred to herein, collectively, as the release layer. The substrate 10 may comprise any strong, heat resistant film, such as polyethylene terephthalate ("PET"), polyethylene-naphthalate ("PEN") or other polyester film. In a preferred embodiment, the substrate 10 may comprise a 75-125 µm thick PET film. PET provides a robust substrate for the disclosed process since it has a high tensile strength, and is chemically, thermally and dimensionally stable. Advantageously, as a result of the thickness, tear resistance and resistance to distortion of PET film, wide rolls, such as those having a width of 1.5-2.0 meters, can be processed quickly and reliably. For example, coated battery stacks can be processed at speeds of 125 m/min.

By comparison, known battery stack fabrication techniques often utilize metal substrates, such as copper or aluminum, which are typically limited to widths of 1 meter or less. This is because metal substrates wider than 1 meter are generally difficult to manufacture and it is difficult to maintain their surfaces uniform and flat during processing. It is also difficult to coat wider metal substrates without distorting them because they are affected by the high heats of drying and the web handling stresses during coating and high temperature oven drying. As a result of the use of a wide substrate roll, the instant process can improve yield or volume output by as much as 50-100%, significantly reducing manufacturing costs and increasing efficiencies.

The release coating 30 may be a silicone coating. For example, the release coating 30 may comprise a commercial silicone release film, such as the 8310 silicone release film available from Saint Gobain in Worcester, MA and the 4365 NK silicone release film available from Mitsubishi Polyester Film in Greer, SC. In another preferred embodiment, the release coating 30 comprises a blend of a silicone material and a tough UV-cured abrasion resistant organic polymer material. In the event of electrode overcoatings onto the separator layer 20, the UV-cured polymer material provides a barrier to diffusion of the solvents of any overcoats (e.g., N-methyl pyrrolidone **(NMP))** into the release substrate 10. This UV-cured abrasion resistant material further enhances the toughness of the release substrate 10 for multiple delaminations and re-uses.

Where the release coating 30 comprises a blend of silicone material and a UV cured abrasion resistant material, the percentage or loading of the UV cured material in the release coating 30 can be varied to achieve the optimum balance between ease of delamination of the coated stack with efficient re-use of the release substrate and resistance to premature delamination of the separator layer 20 during overcoating with other battery layers.

A heat stable and compression resistant porous separator layer 20 is then coated onto the release layer. The coated separator layer 20 can be made thinner than known free-standing separators. The coated separator layer 20 is also highly compatible with the roll-to-roll coating and the coated stack processes described herein.

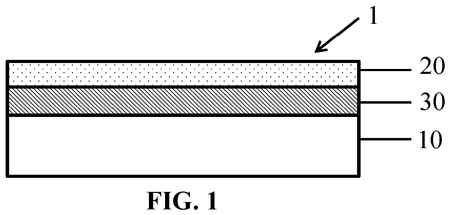

In one embodiment, the separator layer is coated across the full width of the release film at a thickness of 5-8 µm. FIG. 1 shows an example of a cross-sectional view of the assembly 1 after the coating of the separator 20 onto the substrate 10 and release coating 30.

Examples of a suitable separator layer 20 for the present invention include, but are not limited to, the porous separator coatings described in U.S. Pat. Nos. 6,153,337 and 6,306,545 to Carlson et al., U.S. Pat. Nos. 6,488,721 and 6,497,780 to Carlson and U.S. Pat. No. 6,277,514 to Ying et al. Certain of these references disclose boehmite ceramic separator layers, which are suitable for use with the instant invention. *See, e.g.,* U.S. Pat. No. 6,153,337, Col. 4, 11. 16-33, Col. 8, 11. 8-33, Col. 9, 1. 62 - Col. 10, 1. 22 and Col. 18, 1. 59 - Col. 19, 1. 13; U.S. Pat. No. 6,306,545, Col. 4, 1. 31 - Col. 5, 1. 17 and Col. 10, 11. 30-55; and U.S. Pat. No. 6,488,721, Col. 37, 11. 44-63. U.S. Pat. No. 6,497,780 discloses boehmite ceramic separator layers, as well as other ceramic separator layers including those with a xerogel or sol gel structure, all of which are suitable for use with the instant invention. *See, e.g.,* U.S. Pat. No. 6,497,780, Col. 8, 1. 66 - Col. 10, 1. 23 and Col. 11, 1. 33 - Col. 12, 1. 3. U.S. Pat. No. 6,277,514 teaches coating one or more protective coating layers onto a boehmite ceramic separator layer. These protective coating layers include inorganic layers designed to protect the metal anode surface, such as in a lithium metal anode. *See, e.g.,* U.S. Pat. No. 6,277,514, Col. 5, 1. 56 - Col. 6, 1. 42, Col. 9, 11.14-30, Col. 10, 11. 3-43, Col. 15, 11. 27-56 and Col. 16, 11. 32-42.

Preferred separator layers suitable for use with the present invention are also described in U.S. Pat. App. Pub. No. 2013/0171500 by Xu et al. One such separator comprises a microporous layer comprising (a) at least 50% by weight of an aluminum boehmite and (b) an organic polymer, wherein the aluminum boehmite is surface modified by treatment with an organic acid to form a modified aluminum boehmite. *See, e.g.,* Pars. 28, and 34-36. The organic acid may be a sulfonic acid, preferably an aryl sulfonic acid or toluenesulfonic acid, or a carboxylic acid. The modified boehmite may have an Ah O₃ content in the range of 50 to 85% by weight, or more preferably in the range of 65 to 80% by weight. The separator may comprise 60 to 90% by weight of the modified aluminum oxide, or more preferably 70 to 85% by weight of the modified boehmite. In embodiments of the invention, the microporous layer may be a xerogel layer. The organic polymer may comprise a polyvinylidene fluoride polymer. The separator layer 20 may further comprise a copolymer of a first fluorinated organic monomer and a second organic monomer.

Other preferred separator layers suitable for use in embodiments of the present invention are described in International App. No. WO2014/1 79355 by Avison et al. The separator layers described in that application include boehmite, a variety of other pigments, and blends thereof. *See, e.g.,* WO2014/1 79355, Pars. 4-6, 8, 21, 26, and 27. In a preferred embodiment, the separator layer 20 is a nanoporous inorganic ceramic separator. More specifically, the nanoporous battery separator includes ceramic particles and a polymeric binder, wherein the porous separator has a porosity between 35-50% and an average pore size between 10-90 nm, or more preferably between 10-50 nm. The ceramic particles may be inorganic oxide particles or inorganic nitride particles. Preferably, the porous ceramic separator is compatible with the heat drying step discussed below and, for example, exhibits less than 1 % shrinkage when exposed to a temperature of 200°C for at least one hour. The ceramic particles may include at least one of Ah O₃, AlO(OH) or boehmite, Ah O₂ of alumina, AlN, BN, SiN, Zn0 Zr0₂, SiO₂, or combinations thereof. In a preferred embodiment, the ceramic particles include between 65-100% boehmite and a remainder, if any, ofBN. Alternatively, the ceramic particles may include between 65-100% boehmite and a remainder, if any, of AlN. The polymeric binder may include a polymer, such as polyvinylidene difluoride (PVdF) and copolymers thereof, polyvinyl ethers, urethanes, acrylics, cellulosics, styrene-butadiene copolymers, natural rubbers, chitosan, nitrile rubbers, silicone elastomers, PEO or PEO copolymers, polyphosphazenes, and combinations thereof.

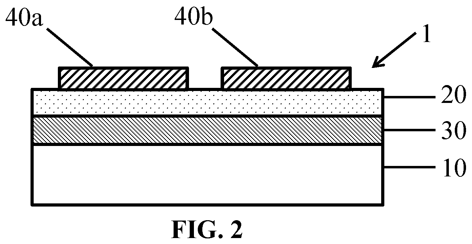

Among other benefits, such ceramic separator layers 20 provide high dimensional stability at the temperatures that are used to heat dry the cells (discussed further below). In addition, the nanopore nature and compressive strength of the ceramic separator 20 enables overcoating with electrode layers 40a, 40b and other layers (e.g., safety shutdown layers), as well as repeated calendering and/or compression of these layers, for example as shown in FIG. 2.

Some features of heat resistant inorganic oxide and inorganic nitride separator layers include strong adhesion to adjacent coatings (e.g., current collector layer, electrode layer) or the inner walls of the cell casing (e.g., pouch) in the presence of electrolyte and other solvents. It has also been found that these separator layers have the ability to "self heal" pinholes or small tears by closing the opening in the presence of the electrolyte of the lithium battery. This is due, in part, to the capillary action caused by the nanoporous structure of the separator material and the propensity of the material to adhere to itself when wet with electrolyte.

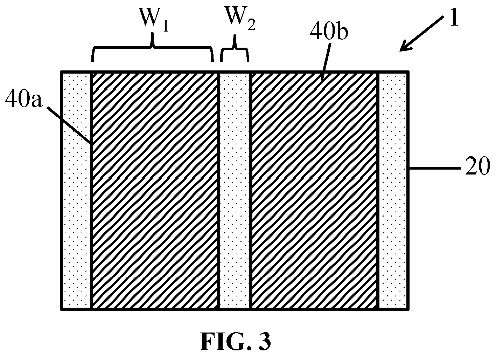

As shown in FIGs. 2 and 3, one or more electrodes 40a, 40b are then coated onto the separator layer 20. Suitable materials and methods for coating electrodes directly on nanoporous separators are described in, for example, U.S. Pat. No. 8,962,182 *(see, e.g.,* Col. 2, 1. 24 - Col. 3, 1. 39, Col. 4,11. 49-56, Col. 5,11. 9-65 and Col. 6,1. 2 - Col. 8, 1. 7), U.S. Pat. No. 9,065,120 *(see, e.g.,* Col. 3, 11. 12-65, Col. 4,11. 18-61, Col. 8,1. 2 - Col. 9,1. 31, Col. 9,11. 42-67 and Col. 14, 11. 6-23), U.S. Pat. No. 9,118,047 (*see, e.g.,* Col. 2, 1. 24 - Col. 3, 1. 33, Col. 4, 11. 36-51 and Col. 5, 1. 3 - Col. 6, 1. 21) and U.S. Pat. No. 9,209,446 *(see, e.g.,* Col. 2, 1. 20-42, Col. 3, 11. 1-56, Col. 5, 11. 16-31 and Col_{.} 7, 1. 1 - Col. 8, 1. 65).

Depending on the requirements of the end use, the electrode coating layer 40a, 40b may be coated on the entire surface of the separator layer 20, in lanes or strips on the separator layer 20, or in patches or rectangle shapes on the separator layer 20. Cathode coating layers may be coated from a pigment dispersion comprising water or an organic solvent, such as N-rnethyl pyrrolidone (NIV!P), and contain the electroactive or cathode active material in a pigment form, a conductive carbon pigment, and an organic polymer. Anode coating layers may be coated from a pigment dispersion comprising an organic solvent or water, and contain the electroactive or anode active material in a pigment form, a conductive carbon pigment, and an organic polymer. These electrode pigments are particles with diameters typically in the range of 0.5 to 5 microns. Preferably, there is no penetration of the conductive and other pigments of the electrodes 40a, 40b into or through the separator layer 20.

In the embodiment shown in FIGs. 2 and 3 the electrodes are coated in lanes 40a, 40b. Electrode lanes 40a, 40b may be deposited using a slot die coater, or other methods known in the art. FIG. 2 shows an example of a cross-section view of a portion of the assembly 1 following the coating of the electrodes 40a, 40b. FIG. 3 shows a plan view of the same assembly 1. Two lanes, 40a and 40b, are shown in FIGs. 2 and 3 for ease of illustration. However, it should be understood that additional or fewer lanes, for example, 1-15 lanes (or even more), could be coated across the full width of the assembly in order to maximize yield or volume output of the number of individual battery stacks that can be slit from the assembly.

In this regard, the electrode layer is coated in lanes 40a, 40b in a desired width for the final coated stack design and battery end use. In one embodiment, the lanes 40a, 40b preferably have a width, W₁, of 12 to 25 cm and are spaced apart from one another by a distance, W₂, of 2 to 4 cm.

As an optional step, following the coating of the lanes 40a, 40b, the assembly 1 may be calendered or compressed. This process densities and reduces the thickness of the electrodes 40a, 40b while maintaining sufficient porosity for acceptable battery cycling (e.g., 30% porosity). As noted above, by reducing the thickness of the electrodes, and increasing the volumetric density of electroactive material, the energy density and life of the battery is increased. Additionally, this process makes the electrode coating less fragile and mechanically stronger and thus more durable. Calendering (and other types of compression) has further been found to reduce surface roughness, minimizing the likelihood of puncturing adjacent layers.

In one embodiment, the separator layer is compressed by 10% or less by this step. The calendering or compression step may, for example, be performed using rollers, plates or other methods known to those in the art. It has been observed that there is substantially no degradation in cell performance, and typically less than 10% compaction or compression of the separator layer 20, when the assembly 1 is calendered under the conditions necessary to compress the electrode layer 40a, 40b by about 30%.

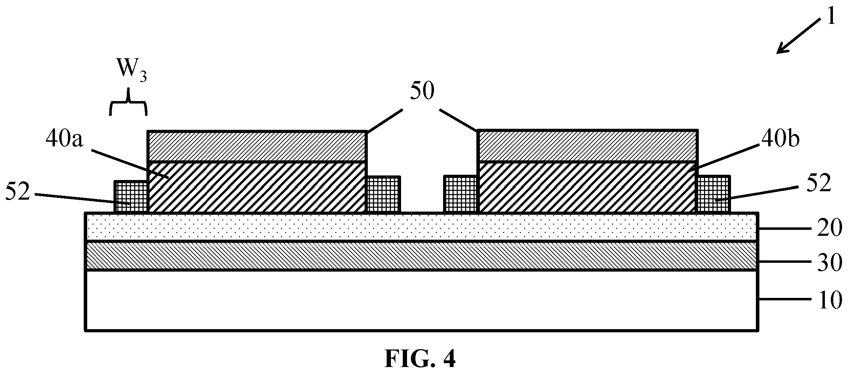

In one embodiment, shown in FIG. 4,a current collection layer 50 is coated onto the electrode side of the assembly, which, at this point in the process, comprises the substrate 10, release coating 30, separator 20 and electrodes 40a, 40b. There are several ways to add the current collection layer according to different embodiments of the invention, including, but not limited to: vacuum coating or sputtering a metal layer onto the electrode surface; and/or laminating a metal foil or layer onto the electrode surface with or without the assistance of an electrically conductive primer coating on the metal layer to increase the adhesion; and/or xenon flash, laser, or other intense photon or heat source sintering of a metal particle coating onto the electrode surface. By utilizing a sintered metal particle coating, as opposed to a metal substrate, the current collector layer 50 can be made thinner, and is highly compatible with the cost efficient roll-to-roll coating process described herein.

In embodiments of the invention, the current collector layer 50 can comprise nickel metal. A nickel current collection layer is preferred because it can be used as a current collection layer in either an anode stack or a cathode stack. In addition, nickel is generally less likely to oxidize and is more electrochemically stable than copper, aluminum, or other metals used in current collector layers. However, as discussed below, copper, aluminum and other materials can be used as well. In one embodiment, an ink layer comprising nickel or nickel oxide particles, such as nanoparticles and/or microparticles, is applied to the assembly **1.** This ink layer may not be sufficiently conductive to act as a current collection layer. The ink layer is then sintered to form a highly electrically conductive nickel metal particle layer. When the ink layer contains a metal oxide, such as nickel oxide or copper oxide, the coating is typically formulated with reducing agents that convert the metal oxide to metal as part of the sintering process that results in a highly conductive metal particle coating layer.

The sintering process, in which the metal particles are bonded together, is useful in achieving improved levels of electrical conductivity (preferably about 1 ohm per square or less). When sintering metal particles by heat or photonic sources it is beneficial to have the metal particles in a diameter size range of 1 µm or less, and preferably 0.5 µm or less. Metal particles with such small diameters typically have a lower melting point and therefore allow for more efficient sintering of the particles. In addition, metal particles with these smaller diameters typically have increased absorption efficiency of ultraviolet and visible photons, particularly, when the particles have diameters that are near or in the nanoparticle range of 0.1 µm diameters or less.

Preferably, an impingement mill is used for producing the small particle sizes desired for efficient xenon flash, laser, or other intense photon or heat source sintering. Descriptions of suitable impingement mills and their operation can be found, for example, in U.S. Pat. No. 5,210,114 to Katsen. Impingement mills are commercially available, e.g., Model Ml l0T or Ml l0P, manufactured by Microfluidics International Corporation, Westwood, MA

One benefit of photonic sources, such as xenon flash lamps and lasers, is that a high intensity of photons can be absorbed by the metal particles in a few microseconds for very efficient heating to the high temperatures for sintering, before the heat can diffuse out of the metal particle layer. Suitable xenon flash lamp sintering systems include, for example, those from Xenon Corporation in Wilmington, MA, and from Novacentrix in Austin, TX. Suitable metal particle inks for flash lamp sintering include, for example, those from Novacentrix, from Applied Nanotech in Austin, TX, and from Intrinsiq Materials in Rochester, NY. One such ink is the METALON ICI-021 copper oxide particle ink manufactured by Novacentrix.

Alternatively, the current collector 50 comprises sintered copper metal particles, which can be used in current collection in an anode stack. An ink layer comprising copper or copper oxide nanoparticles and/or microparticles is preferred for sintering to form highly electrically conductive copper metal layers. Again, an impingement mill is preferred for producing the small particle sizes desired for efficient sintering.

When the metal particle ink is coated on the surface of the electrode, the dark, highly light absorbing properties of the underlying electrode layer assist in the efficiency of the photonic sintering to form the metal current collector layer 50. This is because the photons from light source that are not absorbed by the metal particle coating are completely absorbed by the underlying electrode layer and transfer some of this heat to the metal particle coating. By contrast, no sintering is observed when a black metal particle coating of the same thickness is coated on a poorly light absorbing layer, such as the separator layer and subjected to the same xenon flash lamp sintering process.

The sintering process allows metal particle ink coatings as thin as 2 microns to become highly electrically conductive. Thus, current collector layer 50 can be made considerably thinner than prior art current collectors (e.g., those consisting of a metal substrate). With this highly absorbing electrode underlayer, if the full sintering did not occur on the first photon exposure, the ink can become even more electrically conductive upon a second exposure to the xenon flash lamp or other high intensity photon source. For example, a second exposure has been found to cause the resistivity of the sintered metal particle layer to reduce from, about 3 ohms per square to about 0.5 to I ohm per square. In embodiments of the invention, the thickness of the coated metal particle precursor ink can be as thick as 60 or 70 microns, but it is desirable to minimize this thickness for both battery performance (e.g., to increase the volume of electroactive material) and cost reasons. A thickness of the metal particle precursor inks in the range of 2 to 20 microns is adequate for most lithium and other battery applications.

During the coating of the current collector 50, metal particles are also preferably deposited onto the portion of the separator layer 20 that is adjacent to electrode lanes 40a and 40b. These portions are labeled 52 is FIG. 4, and are referred to herein as reinforcement areas. Reinforcement areas 52, preferably extend, in the cross-machine direction, by a width, W₃, of 5-20 mm. If reinforcement areas 52 will be used for tabbing and cell termination, the coating in these areas needs to be thicker than when it is coated onto the electrode layer 40a, 40b in order to achieve the same efficiency of sintering and the same electrical conductivity as the current collection layer 40a, 40b. As described above, this is because the separator layer 20 does not efficiently absorb the photons from the sintering light sources to provide extra heat for sintering, as does the electrode layer. As discussed below, this property can be used as an advantage in the battery stacks of the present invention by coating the metal ink in the reinforcement areas 52 at the same thickness as it is coated onto the electrode area 40a, 40b (e.g., 5 to IO microns). The sintering of the metal ink to a highly electrically conductive current collector layer 50 occurs in the electrode areas 40a, 40b but the resistivity of the reinforcement areas 52 remains very high, e.g., at I megohm per square orhigher.

Later in the process, the reinforcement areas 52 will become the edge or near edge areas of the coated stacks when the stacks are slit to their final width. The non-conductive metal ink coating that comprises reinforcement areas 52 provides much greater mechanical strength to the coated stacks, especially for tear resistance and tensile strength. This is important afterthe coated stacks have been delaminated from the strong and flexible release substrate and have become free-standing. When they are free-standing, the coated stacks, especially the electrode layers, could (in the absence of a reinforcement area) become brittle and may even crack or tear during processing. The presence of a mechanically strong and flexible edge reinforcement areas 52 minimizes (and can even eliminate) the problem of tearing during the processes of delaminating, slitting, punching, tabbing, and stacking into the final cell. This approach of edge reinforcement is also useful for free-standing separators, such as ceramic separators. The edges can, additionally or alternatively, be made much stronger mechanically by reinforcing the edges or other areas of the separator layer with an overcoat or with a polymeric coating imbibed into the pores of the separator.

After coating and sintering to provide the current collector layer 50, a second electrode layer (not shown) can be coated onto the current collector layer 50. In a preferred embodiment, this second electrode layer is coated in a lane of substantially the same width as the lane of the first electrode layer 40a, 40b and directly over the position of the first electrode layer. This provides anode and cathode stacks with an electrode coating on both sides of the current collector, which are the most typical cell assembly configuration for the electrodes, i.e., double side electrode coatings on the current collector layer. After the second electrode coating, the coated stack on the release substrate is preferably calendered to densify the second electrode. As previously discussed, the calendering process compresses or densifies the current collector layer and any metal particle layers that have not sintered (and are acting as reinforcement areas 52). As also previously discussed, this calendering increases the electrical conductivity and mechanical strength of the current collector layer.

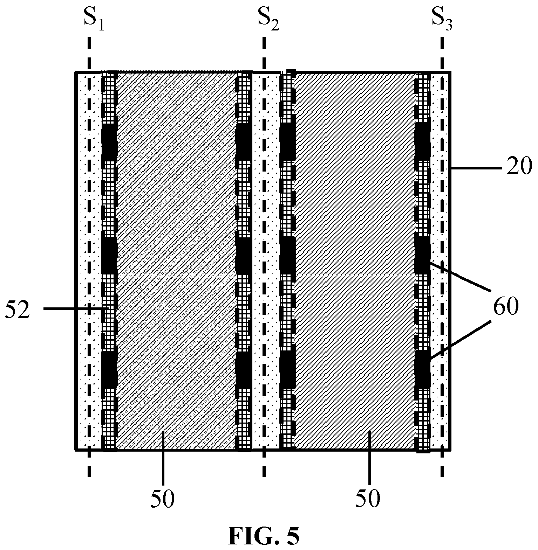

Next, the assembly is prepared for tabbing, i.e., electrical interconnection. In the embodiment shown in FIG. 5, patches 60 of sintered metal particle coating (or other conductive material) have been coated in the desired tabbing location to obtain high electrical conductivity in these areas. Patches 60 are in electrical contact with current collector 50. The ink for the sintered metal particle layer can be coated in a patch 60 by conventional methods, such as a gravure coating, printing or other pattern coating method. It is recommended that the patch 50 be coated to a thickness of 15 to 70 microns, or sufficient thickness to provide a resistivity upon sintering as low as 0.5 to 1 ohm per square.

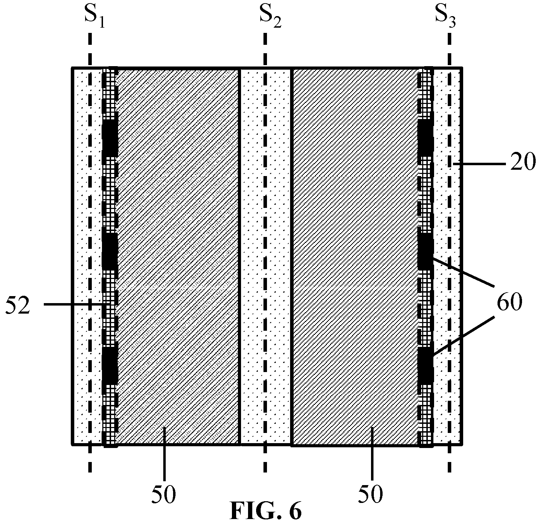

It should be understood that the placement and number of conductive patches 60 will vary based upon the particular battery design. As will be discussed further below, the embodiment shown in FIG. 5 represents a patch 60 configuration for use with flat or prismatic or pouch, batteries. In a cylindrical or "jellyroll" layout, one or more patches 60 would be placed adjacent one side of each electrode lane 40a, 40b, for example, as shown in FIG. 6. It should be noted that, since the electrodes 40a, 40b are not coated in reinforcement areas 52, the thickness of the reinforcement areas 52 does not exceed the thickness of the adjacent electrode layer, which is typically 40 to 100 µm thick. Thus, the current collector coating 50 does not cause the tabbing area to have an overall thickness greater than the adjacent electrode 40a, 40b and current collector layer 50.

In one embodiment, the next step is to delaminate the coated battery stacks from the release substrate 10 so that the coated stacks may be converted into finished cells. As discussed above, to save cost, the substrate 10 may be re-used for making another coated stack. Preferably, the release substrate 10 is cleaned and inspected prior to each re-use. For effective cleaning, three steps should, preferably, be performed, including: (1) neutralization of static charges present, (2) breaking of the boundary layer of air on the moving substrate, and (3) removal and trapping of any contamination on the substrate. In one example, substrate cleaning system designs can be used that incorporate powerful AC ionizing bars that neutralize the static charge present irrespective of the charge polarity. It is preferable to maintain the release substrate 10 in a clean room environment, such as Class 10,000 or better, prior to and during the manufacture of the coated stacks described herein, the delamination process, and the substrate cleaning process. One effective approach for cleaning is to utilize a brush or brushes that both disrupt the boundary air as well as physically dislodge surface contaminants, which are then subsequently vacuumed away for capture within an air filtration unit. Various designs of stationary or rotating brushes are available. Alternative contact system cleaning designs utilize soft, compliant elastomers, such as a cured silicone rolls that directly contact the release substrate surface. A roll of adhesive material can be rotated over the elastomer roll to remove debris. Non-contact cleaning systems include vacuum systems with associated air filtration bags of various filtration capabilities. The elastomer roll debris removal approach is preferred, particularly for its ability to remove debris down to the 0.5 micron diameter level. The UV-cured abrasion resistant polymer and silicone blended release coating 30 of the release substrate, as described above, may be re-used 15 times or more before its release properties are no longer efficient. When this occurs, a new release coating 30 may be applied to the substrate 10 to rejuvenate the release performance and to avoid the cost of using a new substrate. This release coating 30 may also be applied on both sides of the substrate 10 so that the option of coating the coated stack on both sides of the substrate is available for lower process costs.

Thermal runaway and other heat-related safety problems with lithium-ion and other lithium based batteries are well-known. Therefore, after delamination, a thin safety shutdown layer (not shown) may optionally be applied to the separator 20 side of the coated stack. The safety shutdown layer rapidly shuts down the operation of the battery when the temperature of the cell reaches a temperature in the range of 100° C to 150° C, preferably in the range of 105° C to 110° C. In a preferred embodiment, this safety shutdown layer has a thickness from 0.5 to 5 microns. The safety shutdown layer coating may comprise water or alcohol solvents so that it can be conveniently applied during the delamination, slitting, or other converting steps without requiring the use of a coating machine and involving undue mechanical stresses on the coated stacks without having a release substrate attached. The safety shutdown layer may comprise particles selected from the group consisting of polymer particles (e.g., styrene acrylic polymer particles and polyethylene particles) and wax particles.

Suitable safety shutdown layers are described in U.S. Patent No. 6,194,098 to Ying et al. Specifically, Ying teaches a protective coating for battery separators (e.g., boehmite ceramic seperators) comprising polyethylene beads. *See, e.g.,* Ying, Col. 10, 1. 66-Col. 14, 1. 19. When a threshold temperature is reached, the polyethylene beads melt and shut down the cell. Other suitable safety shutdown layers, particular those suitable for use with both ceramic separators and other separators (e.g., plastic separators), are described in U.S. Patent No. 9,070,954 to Carlson et al. Carlson describes a microporous polymer shutdown coating, *see, e.g.,* Col. 2, 1. 15- Col. 3, 1. 28, that can be incorporated into the disclosed coated stack and process.

The next step is to slit the coated stack assembly 1 to the desired width. In the embodiment shown in FIGs. 5 and 6, slitting is done through the areas of the separator layer 20, namely S₁, S₂ and S₃, which do not contain electrode or current collector layers. Since the separator layer 20 is the only layer that is slit, there is no possibility of generating conductive fragments or debris, e.g., from the electrode or current collector layers. By comparison, in prior art methods, slitting is typically performed through a metallic or conductive metal foil layer. However, slitting these metal layers generates conductive debris (e.g., metal shards or shavings) that can cause the cell to fail during manufacture or in the field due to a short circuit, which can result in a fire or explosion of the battery. Thus, the potential for such dangerous conditions are avoided with the present invention.

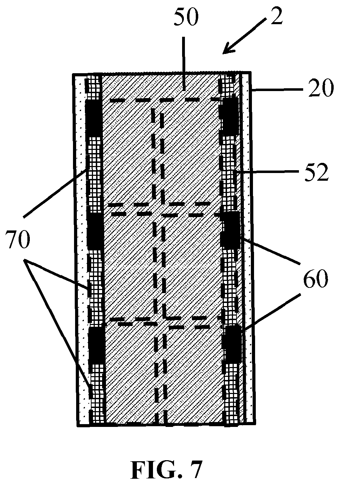

The slit rolls of coated stacks are then punched (by die cutting, laser cutting, or other known cutting processes) into the desired shape for subsequent tabbing and building into the final battery stacks. For example, as shown in Fig. 7, a coated stack strip 2 can be punched into discrete coated stacks 70. Each stack 70 includes at least one patch area 60, which, in a subsequent step, can be used fortabbing.

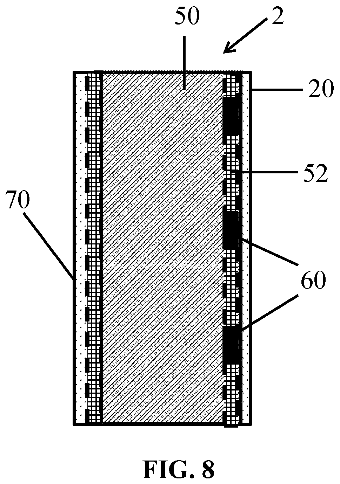

The embodiment shown in FIG. 7 provides a patch configuration for use with flat, or prismatic or pouch, batteries. In this regard, each of the discrete coated stacks 70 are stacked flat for assembly with alternating electrode stacks of the opposite polarity and for packaging. The embodiment shown in FIG. 8 provides a coated stack 70 for use in a jellyroll configuration. In this regard, the coated stack 70 would be wound with a coated stack of the opposite polarity into a jellyroll and packaged in a cylindrical case.

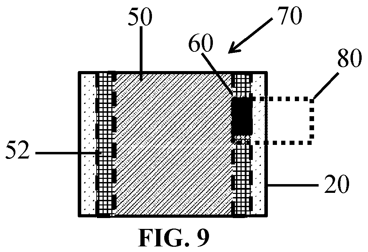

The discrete coated stacks 70 can be tabbed and welded using conventional methods. In a preferred embodiment, shown in FIG. 9, a short intermediate metal foil tab 80 is adhered to the patch area 60. Intermediate tab 80 provides an enhanced edge connection or termination for welding to a nickel clad copper or other metal tab that will extend outside of the cell. This adhesion of an intermediate tab 80 to the current collection layer in the tabbing area can be done by using a conductive adhesive, by ultrasonic bonding, by laser welding, or by taking advantage of the adhesion properties of the separator layer to metal foils in the presence of a solvent, such as one of the organic carbonates used in the electrolyte, and some heat. In a preferred embodiment, this intermediate tab 80 is in contact with the conductive patch 60, adhered to an adjacent coating-free separator layer 20, and extends outside of the slit width to provide a coated-free metal foil area for conventional welding to the outside nickel clad copper or other metal tab. In one embodiment, the welding can be done through the intermediate separator layer between the small metal tabs and provide excellent electrical conductivity. For example, using an ultrasonic welder, such as that available from Dukane Corp., St. Charles, IL, it is possible to weld 60 or more metal layers into a single mass of metal, through the thin intermediate separator layers.

The next step is to stack the punched and tabbed assembly, alternately, into a single coated stack cell, in order to form a battery. This is done by combining at least one anode stack with at least one cathode stack. Thin pieces of free-standing nanoporous ceramic separator material can be added in areas where extra insulation is desired. To obtain adhesion, a solvent, such as an organic carbonate or ether, with some optional heat or an adhesive polymer may be used to adhere the free-standing separator in position. The free-standing nanoporous ceramic separator is also one of the suitable options for the outerwrap of the coated stack before doing the final tab welding and placing into the casing such as a pouch or a metal can.

Because of the very high heat stability of the separator layer 20, the coated battery stack may be vacuum dried at a high temperature for a long time to remove any residual water, and to provide a heat treatment to the battery stack or dry battery cell without risk of the separator shrinking. This step may be carried after the battery stack has been placed in its casing, but prior to filling with electrolyte.

The ceramic separator layer preferably has less than I% shrinkage at 220°C for I hour. Vacuum drying also provides other potential benefits, such as a higher cycling rate capability and greater mechanical strength to the layers, from this heat treatment in the coated stack before filling with the electrolyte. For example, vacuum drying may be done for 4 hours at 130°C. It has been found that the removal of substantially all of the water, preferably below I 00 ppm, improves the cycle life and other cycling properties of the cell. This high temperature vacuum drying, particularly after the coated stacks are placed in their casing (but prior to electrolyte filling), offers significant benefits, including increased consistency in capacity among the cells of the battery and improved capacity stability during cycling life. When a safety shutdown layer is present on the separator, it may be necessary to reduce the temperature and time of the vacuum drying in order to avoid any premature shutdown by causing the porous shutdown layer to become less porous or non-porous. After filling with electrolyte and sealing the cell, the separator layer 20 will adhere to adjacent areas to which it is not adhered in the dry state. This is advantageous for insulation and for cell stack dimensional stability reasons. Finally, the completed battery is cycled for cell formation.

According to the process disclosed herein, a dry room is used for the steps of heat drying, filling the cells with electrolyte and sealing the battery package (e.g., pouch or can). Each of the prior steps (e.g., coating, slitting, punching and stacking or winding) may be performed at ambient conditions (or conditions with a controlled but higher percentage humidity), which facilities are much less expensive to build, operate, and maintain. This significantly reduces facility construction and operational costs, as compared to conventional lithium battery manufacturing processes. In addition, this reduced dry room requirement for cell assembly and provides the option of convenient and low cost shipping of dry cells in their casing to another location for high temperature vacuum drying, electrolyte filling and sealing. In this regard, safety restrictions or prohibitions on the transport of "wet" cells by air or other transport means are becoming increasingly stringent, such that the option of shipping dry cells is particularly advantageous.

## Claims

1. A lithium battery stack (1) comprising:
a porous separator (20) comprising an organic polymer;
an electrode layer (40a, 40b) adjacent the porous separator, the electrode layer comprising an organic polymer; and
a current collector layer (50) coated on the electrode layer, the current collector layer obtained by photonic sintering and comprising sintered metal particles.

2. The lithium battery stack of Claim 1, wherein the current collector layer comprises:
a) sintered nickel particles; or
b) sintered copper particles; or
c) sintered aluminum particles.

3. The lithium battery stack of any one of Claims 1-2, wherein the current collector layer is: (a) 2-20 µm thick; or (b) 2-5 µm thick.

4. The lithium battery stack of any one of Claims 1-3, wherein the porous separator comprises:
a) particles selected from the group consisting of inorganic oxide particles and inorganic nitride particles; and/or
b) boehmite or alumina.

5. The lithium battery stack of Claim 4, option b ), wherein the porous separator includes between 65-95% boehmite by weight.

6. The lithium battery stack of any one of Claims 1-5, wherein the porous separator has an average pore size between 10-90 nm.

7. The lithium battery stack of any one of Claims 1-6, wherein the electrode layer is:
a) a cathode layer; or
b) an anode layer.

8. The lithium battery stack of any one of Claims 1-7, further comprising:
a) a shutdown layer adjacent to the porous separator; and/or
b) a coating of non-sintered metal or metal oxide particles on a portion of the porous separator.

9. A lithium battery comprising:
a lithium battery stack as defined in any one of Claims 1-8.

10. A method of making a lithium battery stack (1) comprising the steps of:
(a) coating a porous separator layer (20) comprising an organic polymer on a substrate (10);
(b) coating an electrode layer (40a, 40b) comprising an organic polymer on the porous separator layer (20);
(c) coating an ink layer comprising metal or metal oxide particles on the electrode layer (40a, 40b);
(d) photonically sintering the ink layer comprising metal or metal oxide particles to form a current collector layer (50) comprising sintered metal particles on the electrode layer (40a, 40b); and
(e) delaminating the substrate (10) from the porous separator layer (20), so as to thereby make the lithium battery stack (1).

11. The method of Claim 10, wherein, after step (b) and before step ( c ), the method further comprises calendering the electrode layer and the porous separator layer.

12. The method of any one of Claims 10-11, wherein, after step ( d) and before step ( e ), the method further comprises calendering the sintered current collector layer, electrode layer and porous separator layer.

13. The method of any one of Claims 10-12, further comprising the step of coating an ink layer of metal or metal oxide particles on a portion of the porous separator layer.

14. The method of any one of Claims 10-13, further comprising the steps of:
(f) interleaving the lithium battery stack of one polarity with a lithium battery stack of the opposite polarity; and
(g) placing the interleaved lithium battery stacks in a casing.

15. The method of Claim 14, further comprising the step of:
(h) vacuum drying the interleaved lithium battery stacks and casing.

16. The method of any one of claims 10-15, wherein the current collector layer is: (a) 2-20 µm thick; or (b) 2-5 µm thick.

## Patentansprüche

1. Lithiumbatteriestapel (1), umfassend:
einen porösen Separator (20), der ein organisches Polymer umfasst;
eine dem porösen Separator angrenzende Elektrodenschicht (40a, 40b), wobei die Elektrodenschicht ein organisches Polymer umfasst; und
eine Stromabnehmerschicht (50), die auf der Elektrodenschicht beschichtet ist, wobei die durch photonisches Sintern erhaltene Stromabnehmerschicht gesinterte Metallpartikel umfasst.

2. Lithiumbatteriestapel nach Anspruch 1, wobei die Stromabnehmerschicht Folgendes umfasst:
a) gesinterte Nickelpartikel; oder
b) gesinterte Kupferpartikel; oder
c) gesinterte Aluminiumpartikel.

3. Lithiumbatteriestapel nach einem der Ansprüche 1 bis 2, wobei die Stromabnehmerschicht: (a) 2-20 µm dick; oder (b) 2-5 µm dick ist.

4. Lithiumbatteriestapel nach einem der Ansprüche 1 bis 3, wobei der poröse Separator Folgendes umfasst:
a) aus der Gruppe ausgewählte Partikel, die aus anorganischen Oxidpartikeln und anorganischen Nitridpartikeln bestehen; und/oder
b) Böhmit oder Aluminiumoxid.

5. Lithiumbatteriestapel nach Anspruch 4, Option b), wobei der poröse Separator 65-95 Gew.-% Böhmit einschließt.

6. Lithiumbatteriestapel nach einem der Ansprüche 1 bis 5, wobei der poröse Separator eine durchschnittliche Porengröße zwischen 10-90 nm aufweist.

7. Lithiumbatteriestapel nach einem der Ansprüche 1 bis 6, wobei die Elektrodenschicht:
a) eine Kathodenschicht; oder
b) eine Anodenschicht ist.

8. Lithiumbatteriestapel nach einem der Ansprüche 1 bis 7, ferner umfassend:
a) eine Absperrschicht neben dem porösen Separator; und/oder
b) eine Beschichtung mit nicht gesinterten Metall- oder Metalloxidpartikeln auf einem Teil des porösen Separators.

9. Lithiumbatterie, umfassend:
einen Lithiumbatteriestapel nach einem der Ansprüche 1 bis 8.

10. Verfahren zum Herstellen eines Lithiumbatteriestapels (1), umfassend folgende Schritte:
(a) Beschichten einer porösen Separatorschicht (20), die ein organisches Polymer auf einem Substrat (10) umfasst;
(b) Beschichten einer Elektrodenschicht (40a, 40b), die ein organisches Polymer auf der porösen Separatorschicht (20) umfasst;
(c) Beschichten einer Tintenschicht, die Metall- oder Metalloxidpartikel auf der Elektrodenschicht (40a, 40b) umfasst;
(d) photonisches Sintern der Tintenschicht, die Metall- oder Metalloxidpartikel umfasst, um eine Stromabnehmerschicht (50) zu bilden, die gesinterte Metallpartikel auf der Elektrodenschicht (40a, 40b) umfasst; und
(e) Delaminieren des Substrats (10) von der porösen Separatorschicht (20), um dadurch den Lithiumbatteriestapel (1) herzustellen.

11. Verfahren nach Anspruch 10, wobei das Verfahren nach Schritt (b) und vor Schritt (c) ferner das Kalandern der Elektrodenschicht und der porösen Separatorschicht umfasst.

12. Verfahren nach einem der Ansprüche 10 bis 11, wobei das Verfahren nach Schritt (d) und vor Schritt (e) ferner das Kalandern der gesinterten Stromabnehmerschicht, der Elektrodenschicht und der porösen Separatorschicht umfasst.

13. Verfahren nach einem der Ansprüche 10 bis 12, ferner umfassend den Schritt des Beschichtens einer Tintenschicht aus Metall- oder Metalloxidpartikeln auf einem Teil der porösen Separatorschicht.

14. Verfahren nach einem der Ansprüche 10 bis 13, ferner umfassend folgende Schritte:
(f) Verschachteln des Lithiumbatteriestapels einer Polarität mit einem Lithiumbatteriestapel der entgegengesetzten Polarität; und
(g) Platzieren der verschachtelten Lithiumbatteriestapel in einem Gehäuse.

15. Verfahren nach Anspruch 14, ferner umfassend folgenden Schritt:
(h) Vakuumtrocknen der verschachtelten Lithiumbatteriestapel und des Gehäuses.

16. Verfahren nach einem der Ansprüche 10 bis 15, wobei die Stromabnehmerschicht:
(a) 2-20 µm dick; oder (b) 2-5 µm dick ist.

## Revendications

1. Empilement (1) de batterie au lithium comprenant :
un séparateur poreux (20) comprenant un polymère organique ;
une couche d'électrode (40a, 40b) adjacente au séparateur poreux, la couche d'électrode comprenant un polymère organique ; et
une couche (50) de collecteur de courant appliquée par revêtement sur la couche d'électrode, la couche de collecteur de courant étant obtenue par frittage photonique et comprenant des particules métalliques frittées.

2. Empilement de batterie au lithium selon la revendication 1, dans lequel la couche de collecteur de courant comprend :
a) des particules de nickel frittées ; ou
b) des particules de cuivre frittées ; ou
c) des particules d'aluminium frittées.

3. Empilement de batterie au lithium selon l'une quelconque des revendications 1 à 2, dans lequel la couche de collecteur de courant mesure : (a) 2 à 20 µm d'épaisseur ; ou (b) 2 à 5 µm d'épaisseur.

4. Empilement de batterie au lithium selon l'une quelconque des revendications 1 à 3, dans lequel le séparateur poreux comprend :
a) des particules choisies dans le groupe consistant en des particules d'oxyde inorganique et des particules de nitrure inorganique ; et/ou
b) de la boehmite ou de l'alumine.

5. Empilement de batterie au lithium selon la revendication 4, option b), dans lequel le séparateur poreux inclut entre 65 et 95 % en poids de boehmite.

6. Empilement de batterie au lithium selon l'une quelconque des revendications 1 à 5, dans lequel le séparateur poreux présente une taille de pore moyenne comprise entre 10 et 90 nm.

7. Empilement de batterie au lithium selon l'une quelconque des revendications 1 à 6, dans lequel la couche d'électrode est :
a) une couche de cathode ; ou
b) une couche d'anode.

8. Empilement de batterie au lithium selon l'une quelconque des revendications 1 à 7, comprenant en outre :
a) une couche d'arrêt adjacente au séparateur poreux ; et/ou
b) un revêtement de particules métalliques ou d'oxyde métallique non frittées sur une partie du séparateur poreux.

9. Batterie au lithium comprenant :
un empilement de batterie au lithium tel que défini dans l'une quelconque des revendications 1 à 8.

10. Procédé de fabrication d'un empilement (1) de batterie au lithium comprenant les étapes suivantes :
(a) l'application par revêtement d'une couche (20) de séparateur poreux comprenant un polymère organique sur un substrat (10) ;
(b) l'application par revêtement d'une couche d'électrode (40a, 40b) comprenant un polymère organique sur la couche (20) de séparateur poreux ;
(c) l'application par revêtement d'une couche d'encre comprenant des particules métalliques ou d'oxyde métallique sur la couche d'électrode (40a, 40b) ;
(d) le frittage photonique de la couche d'encre comprenant des particules métalliques ou d'oxyde métallique pour former une couche (50) de collecteur de courant comprenant des particules métalliques frittées sur la couche d'électrode (40a, 40b) ; et
(e) le délaminage du substrat (10) de la couche (20) de séparateur poreux, de façon à fabriquer l'empilement (1) de batterie au lithium.

11. Procédé selon la revendication 10, dans lequel, après l'étape (b) et avant l'étape (c), le procédé comprend en outre le calandrage de la couche d'électrode et de la couche de séparateur poreux.

12. Procédé selon l'une quelconque des revendications 10 à 11, dans lequel, après l'étape (d) et avant l'étape (e), le procédé comprend en outre le calandrage de la couche de collecteur de courant frittée, de la couche d'électrode et de la couche de séparateur poreux.

13. Procédé selon l'une quelconque des revendications 10 à 12, comprenant en outre l'étape d'application par revêtement d'une couche d'encre de particules métalliques ou d'oxyde métallique sur une partie de la couche de séparateur poreux.

14. Procédé selon l'une quelconque des revendications 10 à 13, comprenant en outre les étapes suivantes :
(f) l'entrelacement de l'empilement de batterie au lithium d'une polarité avec un empilement de batterie au lithium de la polarité opposée ; et
(g) la mise en place des empilements de batterie au lithium entrelacés dans un boîtier.

15. Procédé selon la revendication 14, comprenant en outre l'étape suivante :
(h) le séchage sous vide des empilements de batterie au lithium entrelacés et du boîtier.

16. Procédé selon l'une quelconque des revendications 10 à 15, dans lequel la couche de collecteur de courant mesure : (a) 2 à 20 µm d'épaisseur ; ou (b) 2 à 5 µm d'épaisseur.
